# EUROPEAN PATENT APPLICATION

(11) **EP 3 498 888 A1**
(43) Date of publication of application: **19.06.2019**
(21) Application number: 17839042.3
(22) Date of filing: 08.06.2017
(51) Int. Cl.: C25D 3/56, C25B 1/04, C25B 11/06, C25D 7/00

(54) **ELECTRODE MANUFACTURING METHOD**

(30) Priority: 12.08.2016 JP 2016158574
(71) Applicant: Hitachi Zosen Corporation, Osaka-shi, Osaka 559-8559 (JP)
(72) Inventor: YOSHIDA, Tetsuya, Osaka-shi Osaka 559-8559 (JP); SASAKI, Yusuke, Osaka-shi Osaka 559-8559 (JP)
(74) Representative: Grünecker Patent- und Rechtsanwälte PartG mbB
(86) International application number: PCT/JP2017/021383
(87) International publication number: WO 2018/029967

(57) **Abstract**

The method for producing an electrode includes the steps of dissolving a soluble salt of nickel, a soluble salt of iron, and aminocarboxylic acid in water to prepare a plating solution, and immersing a substrate in the plating solution to form a plating on the substrate by electroplating. In the step of forming of the plating, the pH of the plating solution is more than 2.0.

## Description

### TECHNICAL FIELD

The present invention relates to a method for producing an electrode, to be specific, to a method for producing an electrode suitable for electrolysis of an aqueous alkaline solution (hereinafter referred to as alkaline solution).

### BACKGROUND ART

Conventionally, an alloy electrode used in various industrial fields, for example, for electrolysis of an alkaline solution has been known.

For such a method for producing an alloy electrode, for example, Patent Document 1 has proposed a method for producing an electrode for electrolysis of an aqueous solution. In this method, a plating solution contains a soluble salt of nickel, a soluble salt of iron, and aminocarboxylic acid, and acid is added to the plating solution to adjust its pH to 2 or less. This plating solution is used to subject an electrode substrate to electroplating (for example, see Patent Document 1).

Then, in such a method for producing an electrode for electrolysis of an aqueous solution, a plating having an alloy composition composed of iron, carbon, and nickel is formed on the substrate.

### Citation List

### Patent Document

Patent Document 1:
Japanese Unexamined Patent Publication No. 2015-178668

### SUMMARY OF THE INVENTION

### PROBLEM TO BE SOLVED BY THE INVENTION

In electroplating in which a plating solution is used, a high plating efficiency (= actual deposition amount/theoretical deposition amount × 100) is required. However, in the method for producing an electrode for electrolysis of an aqueous solution described in Patent Document 1, there are disadvantages: the plating efficiency cannot be secured sufficiently.

Thus, the present invention provides a method for producing an electrode with which a high plating efficiency can be stably secured.

### MEANS FOR SOLVING THE PROBLEM

The present invention [1] includes a method for producing an electrode, the method including the steps of dissolving a soluble salt of nickel, a soluble salt of iron, and aminocarboxylic acid in water to prepare a plating solution; and immersing a substrate in the plating solution to form a plating on the substrate by electroplating, wherein in the step of forming of the plating, the pH of the plating solution is more than 2.0.

With this method, in the step of forming the plating, the plating solution has a pH of more than the above-described value, and therefore compared with the case where the plating solution has a pH of the above-described value or less, high plating efficiency can be stably secured. Therefore, plating can be efficiently formed, and costs necessary for electroplating can be reduced.

Also, in the plating solution, a soluble salt of nickel, a soluble salt of iron, and aminocarboxylic acid are dissolved, and therefore the plating formed on the substrate contains nickel, iron, and carbon. Such an electrode can be used as an anode and as a cathode in electrolysis of an alkaline solution. Therefore, the above-described method allows for production of an electrode (anode and cathode) suitable for electrolysis of an alkaline solution.

The present invention [2] includes the method for producing an electrode described in [1] above, wherein the plating solution has an aminocarboxylic acid concentration of 0.20 mol/L or more.

With this method, the aminocarboxylic acid concentration of the plating solution is the above-described value or more, and therefore plating durability can be improved.

Meanwhile, when the aminocarboxylic acid concentration of the plating solution is the above-described value or more, plating efficiency may be reduced. However, with the above-described method, in the step of forming the plating, the plating solution has a pH of more than the above-described value, and therefore even if the plating solution has an aminocarboxylic acid concentration of the above-described value or more, plating efficiency may be sufficiently secured.

The present invention [3] includes the method for producing an electrode described in [1] or [2] above, wherein the step of preparing the plating solution further include dissolving a soluble salt of cobalt.

With this method, a soluble salt of cobalt is dissolved in the plating solution, and therefore the plating formed on the substrate further contains cobalt. Such an electrode can be suitably used as a cathode for electrolysis of an alkaline solution, and hydrogen generation efficiency can be improved. Therefore, with the above-described method, a cathode suitable for electrolysis of an alkaline solution can be produced.

### Effects of the Invention

With the method for producing an electrode of the present invention, a high plating efficiency can be stably secured.

### BRIEF DESCRIPTION OF THE DRAWINGS

FIG. 1 is a graph illustrating correlation between the pH of the plating solution and plating efficiency of Examples 1 to 4 and Comparative Examples 1 to 3.
FIG. 2 is a graph illustrating correlation between the lysine concentration and plating efficiency of Examples 8 to 10 and Comparative Examples 4 to 7, 13 to 16.
FIG. 3 is a graph illustrating correlation between the plating solution temperature and plating efficiency of Examples 5 to 7, 10 to 12 and Comparative Examples 7 to 12.
FIG. 4 is a graph illustrating correlation between the plating solution temperature and plating efficiency of Examples 13 to 18 and Comparative Examples 17 to 22.

### Description of the embodiments

### 1. Method for producing electrode

An embodiment of the method for producing an electrode includes a preparation step, in which a plating solution is prepared, and a plating formation step, in which a substrate is subjected to electroplating.

### (1) Plating solution preparation step

In the method for producing an electrode, first, a soluble salt of nickel, a soluble salt of iron, and aminocarboxylic acid are dissolved in water by a known method to prepare a plating solution.

The soluble salt of nickel is a water soluble nickel salt, and for example, nickel sulfate, nickel chloride, and nickel nitrate are used. The soluble salt of nickel can be used singly, or can be used in combination of two or more. Of the soluble salt of nickel, preferably, nickel sulfate and nickel chloride are used, even more preferably, nickel sulfate and nickel chloride are used in combination.

The plating solution has a nickel soluble salt concentration of, for example, 0.5 mol/L or more, preferably 1.0 mol/L or more, and for example, 2.0 mol/L or less, preferably 1.5 mol/L or less.

When nickel sulfate and nickel chloride are used in combination, the plating solution has a nickel sulfate concentration of, for example, 0.90 mol/L or more and 1.4 mol/L or less, and the plating solution has a nickel chloride concentration of, for example, 0.10 mol/L or more and 0.40 mol/L or less.

The soluble salt of iron is a water soluble iron salt, and for example, iron sulfate, iron chloride, and iron nitrate are used. The soluble salt of iron may have three iron ions, preferably two iron ions. The soluble salt of iron can be used singly, or can be used in combination of two or more. Of the soluble salt of iron, preferably, iron (II) sulfate is used.

The plating solution has a soluble salt iron concentration of, for example, 0.03 mol/L or more, preferably 0.10 mol/L or more, further preferably 0.12 mol/L or more, and for example, 0.3 mol/L or less, preferably 0.20 mol/L or less.

Aminocarboxylic acid is dissolved in the plating solution in view of improvement in plating durability, and for example, lysine, saccharin, and arginine are used. Aminocarboxylic acid can be used singly, or can be used in combination of two or more. Of the aminocarboxylic acids, preferably, lysine is used.

Aminocarboxylic acid is preferably used as aminocarboxylate, in view of water-solubility. For the aminocarboxylate, for example, aminocarboxylate hydrochloride is used. Of the aminocarboxylates, preferably, lysine hydrochloride is used.

The plating solution has an aminocarboxylic acid concentration of, for example, 0.05 mol/L or more, preferably 0.20 mol/L or more, more preferably 0.30 mol/L or more, particularly preferably 0.45 mol/L or more, and for example, 1.0 mol/L or less, preferably 0.50 mol/L or less.

When the plating solution has an aminocarboxylic acid concentration of the above-described lower limit or more, the plating durability can be improved.

To the plating solution, a soluble salt of cobalt can be dissolved in accordance with use of the electrode. When a soluble salt of cobalt is dissolved in the plating solution, Co can be contained in the plating to be described later, and a cathode suitable for electrolysis of an alkaline solution can be produced.

The soluble salt of cobalt is a water soluble cobalt salt, and for example, cobalt sulfate, cobalt chloride, and cobalt nitrate are used. The soluble salt of cobalt may have three cobalt ions, preferably two cobalt ions. The soluble salt of cobalt can be used singly, or can be used in combination of two or more. Of the soluble salt of cobalt, preferably, cobalt (II) sulfate is used.

The plating solution has a soluble salt cobalt concentration of, for example, 0.005 mol/L or more, preferably 0.010 mol/L or more, and for example, 0.050 mol/L or less, preferably 0.025 mol/L or less.

Furthermore, to the plating solution, as necessary, in view of suppressing changes in pH at the cathode interface due to hydrogen generation during the plating formation step, boric acid is used, and in view of improving hydrophilicity of the electrode interface, an alkyl sulfate ester salt can be dissolved.

The plating solution has a boric acid concentration of, for example, 0.10 mol/L or more, preferably 0.30 mol/L or more, and for example, 1.0 mol/L or less, preferably 0.70 mol/L or less.

Examples of the alkyl sulfate ester salt include sodium dodecyl sulfate and sodium benzenesulfonate. Alkyl sulfate ester salt can be used singly, or can be used in combination of two or more. Of the alkyl sulfate ester salt, preferably, sodium dodecyl sulfate is used.

The plating solution has a pH of more than 2.0, preferably 2.1 or more, more preferably 2.2 or more, and for example, 5.0 or less, preferably 3.0 or less, more preferably 2.5 or less.

When the plating solution has a pH of the above-described lower limit or more, a high plating efficiency can be securely achieved, and when the plating solution has a pH of the above-described upper limit or less, a plating having a desired alloy composition can be reliably formed.

The plating solution has a pH within the above-described range preferably when the above-described components are dissolved in water and the plating solution is prepared. As necessary, acids (for example, sulfuric acid, nitric acid, hydrochloric acid, etc.) can be added to the plating solution to adjust the pH of the plating solution to be within the above-described range.

### (2) Plating formation step

Then, an anode is immersed in a plating solution, and a substrate (cathode) is immersed also in spaced apart relation so as to face the anode.

The anode is a metal plate, and for example, is composed of nickel. The anode is preferably prepared in two, and the two anodes are immersed in the plating solution in spaced apart relation to face each other.

The substrate is a metal plate, and functions as a cathode in the plating formation step. The substrate material is not particularly limited, and for example, nickel, iron, and cobalt are used. Of the substrate material, preferably, nickel is used.

The substrate is immersed in the plating solution in between the two anodes in spaced apart relation to face the anodes.

Then, the temperature of the plating solution is adjusted to a predetermined temperature by a known method (for example, water bath, etc.).

The temperature of the plating solution in the plating formation step can be, for example, 10°C or more, preferably 20°C or more, more preferably more than 30°C, particularly preferably 35°C or more, and for example, 80°C or less, preferably 50°C or less, more preferably 40°C or less.

When the plating solution has a temperature of the above-described lower limit or more, plating efficiency can be improved, and when the plating solution has a temperature of the above-described upper limit or less, energy necessary for the heating of the plating solution can be reduced.

Then, while keeping the pH and temperature of the plating solution within the above-described range, electroplating is carried out at a constant current to form a plating on the substrate.

The current density is, for example, 50 A/m² or more, preferably 100 A/m² or more, and for example, 500 A/m² or less, preferably 300 A/m² or less.

The plating time is, for example, 5 minutes or more, preferably 10 minutes or more, and for example, 180 minutes or less, preferably 30 minutes or less.

In the above-described manner, a plating is formed on the substrate by electroplating, and an electrode containing the substrate and the plating formed on the substrate is prepared.

The plating formation step has a plating efficiency of, for example, 50% or more, preferably 60% or more, more preferably 70% or more, particularly preferably 75% or more, and for example, 95% or less. The plating efficiency is calculated by the method described in Examples.

The plating has a thickness of, for example, 0.2 µm or more, preferably 1.5 µm or more, and for example, 5.0 µm or less, preferably 2.0 µm or less.

When the plating solution contains a soluble salt of nickel, a soluble salt of iron, and aminocarboxylic acid, and does not contain a soluble salt of cobalt, the plating is formed as an alloy plating (in the following referred to as Ni-Fe-C alloy plating) containing Ni, Fe, and C, and containing no Co.

In the Ni-Fe-C alloy, Ni is 45 atom% or more and 96.4 atom% or less, Fe is 3 atom% or more and 45 atom% or less, and C is 0.6 atom% or more and 10 atom% or less.

When the plating solution contains a soluble salt of nickel, a soluble salt of iron, aminocarboxylic acid, and a soluble salt of cobalt, the plating is formed as an alloy plating (in the following, referred to as Ni-Fe-Co-C alloy plating) containing Ni, Fe, Co, and C.

In the Ni-Fe-Co-C alloy, Ni is 5 atom% or more and 96.4 atom% or less, Fe is 2.9 atom% or more and 65 atom% or less, Co is 0.1 atom% or more and 20 atom% or less, and C is 0.6 atom% or more and 10 atom% or less.

The electrode can be used in various industrial fields (for example, electrolysis of alkaline solution, electrolysis of sea water, electrolysis of saline water in chlorine production, etc.). In particular, it is suitably used for electrolysis of an alkaline solution. Particularly, the electrode containing a Ni-Fe-C alloy plating can be used as an anode (oxygen generating electrode) suitable for electrolysis of an alkaline solution, and the electrode containing an Ni-Fe-Co-C alloy plating can be used for a cathode (hydrogen generating electrode) suitable for electrolysis of an alkaline solution.

### 2. Electrolysis of alkaline solution

Next, electrolysis of an alkaline solution using an electrode containing a Ni-Fe-C alloy plating (hereinafter referred to as Ni-Fe-C electrode) and an electrode containing a Ni-Fe-Co-C alloy plating (in the following, referred to as Ni-Fe-Co-C electrode) is described.

Examples of the alkaline substance in the alkaline solution include sodium hydroxide and potassium hydroxide. The alkaline substance can be used singly, or can be used in combination of two or more. Of these examples of the alkaline substance, preferably, potassium hydroxide is used. The alkaline solution has an alkaline substance concentration of, for example, 1.0 mass% or more, preferably 20 mass% or more, and for example, 50 mass% or less, preferably 40 mass% or less.

Then, using the Ni-Fe-C electrode as an anode, it is immersed in an alkaline solution, and using the Ni-Fe-Co-C electrode as a cathode, it is immersed in the alkaline solution. Thereafter, the alkaline solution is subjected to electrolysis under known conditions (for example, at a temperature of 90°C).

In this manner, oxygen is generated in the Ni-Fe-C electrode (anode), and hydrogen is generated in the Ni-Fe-Co-C electrode (cathode).

### 3. Operations and effects

In the above-described method for producing an electrode, the plating solution has a pH of more than 2.0 in the plating formation step. Therefore, a high plating efficiency can be stably secured. Therefore, the plating can be formed efficiently, and necessary costs for electroplating can be reduced.

Also, in the plating solution, a soluble salt of nickel, a soluble salt of iron, and aminocarboxylic acid are dissolved, and therefore the plating formed on the substrate contains nickel, iron, and carbon. Therefore, electrodes (anode and cathode) suitable for electrolysis of an alkaline solution can be produced.

Industrially, repetitive use of the plating solution is desired. With the above-described method for producing an electrode, a high plating efficiency is secured, and therefore a plating can be formed efficiently even if the plating solution is used repetitively.

Furthermore, when the plating solution has an aminocarboxylic acid concentration of 0.20 mol/L or more, plating durability can be improved. Also, in the plating formation step, the plating solution has a pH of more than the above-described value, and therefore even if the plating solution has an aminocarboxylic acid concentration of the above-described value or more, plating efficiency can be secured sufficiently.

When a soluble salt of cobalt is dissolved in the plating solution, the plating formed on the substrate further contains cobalt. Therefore, a cathode more suitable for electrolysis of alkaline water can be produced.

### Examples

The present invention is further described in detail based on EXAMPLES below. However, the present invention is not limited to Examples. The specific numeral values such as mixing ratio (content), physical property values, and parameters used in the following can be replaced with the upper limit value (numeral values defined with "or less", and "less than") or lower limit value (numeral values defined with "or more", and "more than") of corresponding mixing ratio (content), physical property values, and parameters in the above-described

### "DESCRIPTION OF EMBODIMENTS".

### Examples 1 to 4 and Comparative Examples 1 to 3

Nickel sulfate (II) hexahydrate [NiSO₄·6H₂O: soluble salt of nickel], nickel chloride (II) hexahydrate [NiCl₂·6H₂O: soluble salt of nickel], iron (II) sulfate heptahydrate [FeSO₄·7H₂O: soluble salt of iron], cobalt (II) sulfate heptahydrate [CoSO₄·7H₂O: soluble salt of cobalt], lysine hydrochloride [C₆H₁₄N₂O₂·HCl: aminocarboxylic acid], boric acid [B(OH)₃], and sodium dodecyl sulfate [C₁₂H₂₅SO₄Na] were dissolved in 80 mL of water to prepare a plating solution of the composition below (preparation step). The prepared plating solution had a pH of 3.00.

### Plating solution:

NiSO₄·6H₂O---1.14 mol/L
NiCl₂·6H₂O---0.19 mol/L
FeSO₄·7H₂O---0.144 mol/L
CoSO₄·7H₂O---0.018 mol/L
C₆H₁₄N₂O₂·HCl-0.50 mol/L
B(OH)₃------0.49 mol/L
C₁₂H₂₅SO₄Na---0.000104 mol/L

Thereafter, to the plating solution, as necessary, a concentrated sulfuric acid was added to adjust the pH of the plating solution to the values shown in Table 1.

Then, two anodes composed of nickel were immersed in 80 mL of plating solution so as to face each other in spaced apart relation. Then, a substrate composed of nickel (total area: 2 cm2) was immersed in the plating solution in between the two anodes in spaced apart relation to face the anodes. The distance from the anode to the substrate was 4.5 cm.

Then, after adjusting the temperature of the plating solution (liquid temperature) to 25°C, while keeping the temperature, the substrate was subjected to electroplating with a current density of 300 A/m² and a constant current for 10 minutes. In this manner, an alloy plating containing Ni, Fe, Co, and C was formed on the substrate.

An electrode having the substrate, and the alloy plating formed on the substrate was prepared in the above-described manner.

**[Table 1]**

| no. | Plating solution | | | Plating efficiency |
|---|---|---|---|---|
| | pH | Lysine concentration | Temperature | |
| | | [mol/L] | [°C] | [%] |
| Comparative Example 1 | 1.50 | 0.50 | 25 | 20.10 |
| Comparative Example 2 | 1.75 | | | 54.81 |
| Comparative Example 3 | 2.00 | | | 71.71 |
| Example 1 | 2.10 | | | 75.82 |
| Example 2 | 2.25 | | | 80.38 |
| Example 3 | 2.50 | | | 83.58 |
| Example 4 | 3.00 | | | 84.95 |

### Examples 5 to 12 and Comparative Examples 4 to 16

An electrode was prepared in the same manner as in Examples 1 to 4 and Comparative Examples 1 to 3, except that the pH of the plating solution, the lysine hydrochloride concentration of the plating solution (lysine concentration), and the temperature of the plating solution were changed to the values shown in Table 2 below.

**[Table 2]**

| no. | Plating solution | | | Plating efficiency |
|---|---|---|---|---|
| | pH | Lysine concentration | Temperature | |
| | | [mol/L] | [°C] | [%] |
| Comparative Example 4 | 1.50 | 0.05 | 25 | 46.6 |
| Comparative Example 5 | | 0.10 | | 28.3 |
| Comparative Example 6 | | 0.20 | | 25.1 |
| Comparative Example 7 | | 0.50 | | 18.3 |
| Comparative Example 8 | | | 31 | 19.6 |
| Comparative Example 9 | | | 35 | 22.8 |
| Comparative Example 10 | | | 45 | 32.9 |
| Comparative Example 11 | | | 55 | 42.9 |
| Comparative Example 12 | | | 75 | 57.09 |
| Comparative Example 13 | 2.00 | 0.05 | 25 | 64.9 |
| Comparative Example 14 | | 0.10 | | 59.4 |
| Comparative Example 15 | | 0.20 | | 55.7 |
| Comparative Example 16 | | 0.50 | | 57.6 |
| Example 5 | 2.50 | 0.50 | 25 | 80.4 |
| Example 6 | | | 35 | 86.8 |
| Example 7 | | | 45 | 85.9 |
| Example 8 | 3.00 | 0.05 | 25 | 82.2 |
| Example 9 | | 0.20 | | 79.5 |
| Example 10 | | 0.50 | | 85.0 |
| Example 11 | | | 35 | 90.4 |
| Example 12 | | | 45 | 92.3 |

### Examples 13 to 18 and Comparative Examples 17 to 22

An electrode was prepared in the same manner as in Comparative Examples 7 to 12 and Examples 5 to 7 and 10 to 12, except that cobalt (II) sulfate heptahydrate was not dissolved in the plating solution, the iron (II) sulfate heptahydrate concentration was changed to 0.108 mol/L, and the lysine hydrochloride concentration was changed to 0.20 mol/L.

That is, the plating solution composition in Examples 13 to 18 and Comparative Examples 17 to 22 was as follows.

### Plating solution:

NiSO₄·6H₂O---1.14 mol/L
NiCl₂·6H₂O---0.19 mol/L
FeSO₄·7H₂O---0.108 mol/L
C₆H₁₄N₂O₂·HCl-0.20 mol/L
B(OH)₃------0.49 mol/L
C₁₂H₂₅SO₄Na---0.000104 mol/L

The pH of the plating solution, the lysine hydrochloride concentration (lysine concentration) of the plating solution, and the temperature of the plating solution in Examples 13 to 18 and Comparative Examples 17 to 22 are shown in Table 3 below. In Examples 13 to 18 and Comparative Examples 17 to 22, the electrode had a substrate, and an alloy plating formed on the substrate and contained Ni, Fe, and C.

**[Table 3]**

| no. | Plating solution | | | Plating efficiency |
|---|---|---|---|---|
| | pH | Lysine concentration | Temperature | |
| | | [mol/L] | [°C] | [%] |
| Comparative Example 17 | 1.50 | 0.20 | 25 | 31.1 |
| Comparative Example 18 | | | 31 | 40.2 |
| Comparative Example 19 | | | 35 | 49.3 |
| Comparative Example 20 | | | 45 | 53.0 |
| Comparative Example 21 | | | 55 | 58.5 |
| Comparative Example 22 | | | 75 | 59.4 |
| Example 13 | 2.50 | 0.20 | 25 | 86.8 |
| Example 14 | | | 35 | 90.4 |
| Example 15 | | | 45 | 92.3 |
| Example 16 | 3.00 | 0.20 | 25 | 88.6 |
| Example 17 | | | 35 | 93.2 |
| Example 18 | | | 45 | 94.1 |

### <Plating efficiency>

The plating efficiency in Examples and Comparative Examples was calculated as follows.

The mass of the substrate (electrode) before plating and after plating was measured with an electronic scale. Then, based on the difference in the mass of the substrate (electrode) after plating and before plating, the actual deposition amount of the alloy plating was calculated. Also, assuming that all deposits through Ni based on the amount of electrification, the theoretical deposition amount was calculated. Then, the percentage of the actual deposition amount relative to the theoretical deposition amount (actual deposition amount/theoretical deposition amount × 100) was calculated as plating efficiency. The results are shown in the above-described Table 1 to Table 3.

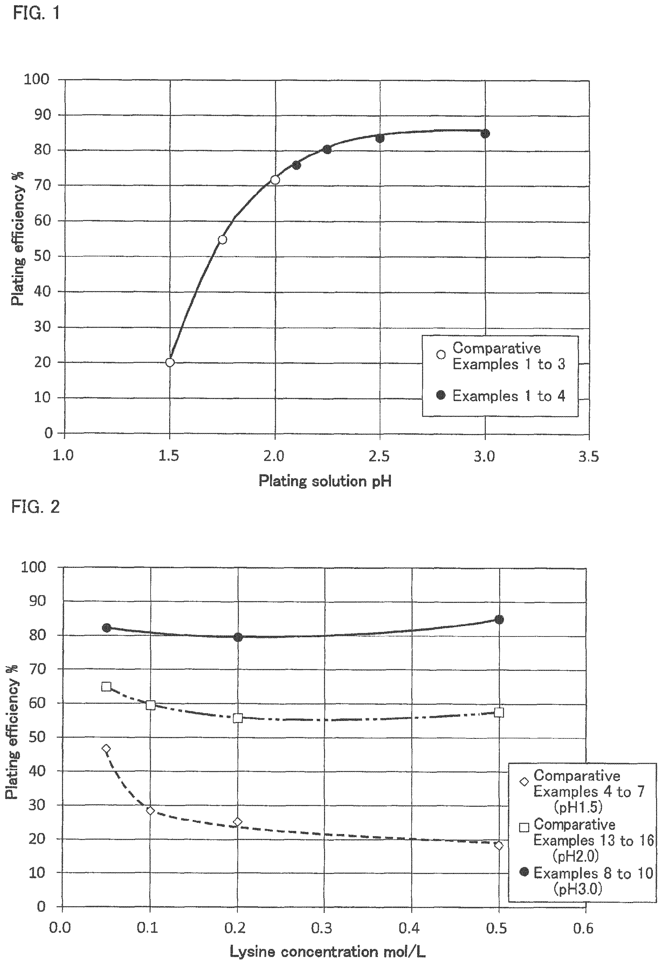

Correlation between the pH of the plating solution and plating efficiency in Examples 1 to 4 and Comparative Examples 1 to 3 are shown in FIG. 1. FIG. 1 shows that when the pH of the plating solution is more than 2.0, a high plating efficiency of 75% or more can be ensured.

Correlation between lysine concentration and plating efficiency in Examples 8 to 10 and Comparative Examples 4 to 7, 13 to 16 are shown in FIG. 2. These Examples and Comparative Examples show that when the lysine concentration is 0.2 mol/L or more, compared with the case where the lysine concentration was less than 0.2 mol/L, plating durability improved. FIG. 2 shows that when the lysine concentration is 0.2 mol/L or more and the pH of the plating solution was more than 2.0, plating efficiency can be improved compared with the case where the pH of the plating solution was 2.0 or less.

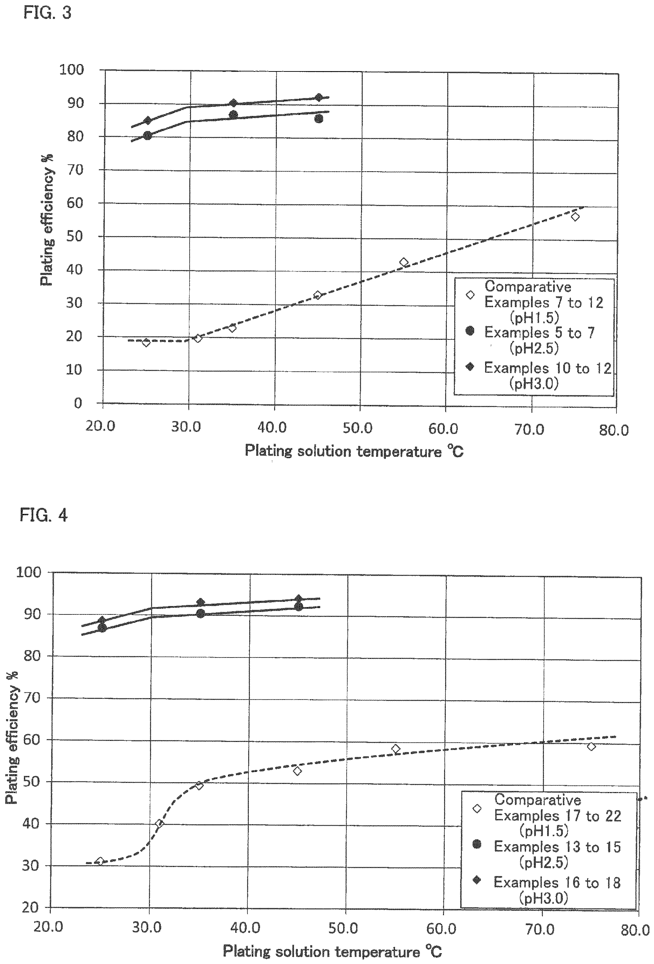

Correlation between plating solution temperature and plating efficiency in Examples 5 to 7, 10 to 12 and Comparative Examples 7 to 12 are shown in FIG. 3. Correlation between plating solution temperature and plating efficiency in Examples 13 to 18 and Comparative Examples 17 to 22 are shown in FIG. 4. FIG. 3 and FIG. 4 show that when the pH of the plating solution is more than 2.0, a high plating efficiency can be ensured in the temperature range of the plating solution of 25°C to 75°C compared with the case where the pH of the plating solution is 2.0 or less.

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The method for producing an electrode of the present invention is suitably used for production of an electrode that can be used in various industrial fields, for example, electrolysis of an alkaline solution, electrolysis of sea water, and electrolysis of saline water in chlorine production.

## Claims

1. A method for producing an electrode, the method including the steps of:
dissolving a soluble salt of nickel, a soluble salt of iron, and aminocarboxylic acid in water to prepare a plating solution, and
immersing a substrate in the plating solution to form a plating on the substrate by electroplating,
wherein in the step of forming of the plating, the pH of the plating solution is more than 2.0.

2. The method for producing an electrode according to Claim 1,
wherein the plating solution has an aminocarboxylic acid concentration of 0.20 mol/L or more.

3. The method for producing an electrode according to Claim 1,
wherein the step of preparing the plating solution further include dissolving a soluble salt of cobalt.
